# EUROPEAN PATENT APPLICATION

(11) **EP 2 385 703 A1**
(43) Date of publication of application: **09.11.2011**
(21) Application number: 10250886.8
(22) Date of filing: 06.05.2010
(51) Int. Cl.: H04N 7/18, G08B 13/196, H04N 5/225

(54) **Remote-control door viewer surveillance system**

(71) Applicant: Adri Hardware Co., Ltd., Chung-ho City T'ai pei (TW)
(72) Inventor: Wang, Chuan, Chung-ho City Taipei County (TW)
(74) Representative: Merrifield, Sarah Elizabeth

(57) **Abstract**

A remote-control door viewer surveillance system includes a door viewer holding a lens assembly (12) in the door panel of a house, an image sensor (2) for picking up image signals through the lens assembly (12), an image processing circuit (41) for processing image signals received from the image sensor (2) into digital image signals, a monitor (5) for displaying images of digital image signals outputted by the image processing circuit (41), a communication module (42) for transmitting digital image signals outputted by the image processing circuit (41) to the user's mobile phone (421), a memory for storing digital image signals outputted by the image processing circuit (41) for further review, and a TCP/IP equipment (422) for transmitting the digital image signal outputted by the image processing circuit (41) to a computer (423) at a predetermined IP address for monitoring and storage.

## Description

### BACKGROUND OF THE INVENTION

### 1. Field of the Invention:

The present invention relates to a security system and more particularly, to a remote-control door viewer surveillance system.

### 2. Description of the Related Art:

In cities, stealing and robbery cases are frequently heard. Further, there is shortage of personnel in civil police force, which is responsible for deterioration in law and order situation. Therefore, various high-tech security systems have been developed and widely used by companies and rich families. People may hire security persons to patrol their offices or homes. It is quite expensive to protect the homes or offices in this manner. Further, stealing cases are frequently seen in house and shops that are equipped with a security system. Further, people may install camera & video surveillance CCTV systems for home and office surveillance. These systems automatically record video images for further review of a particular event. However, these security systems cannot guard against intruders. The host of the home or office knows the situation only after occurrence of the event. It is too late to stop the intruders when the host or policeman knows the event or receives the report of the event.

Therefore, it is desirable to provide a surveillance system that eliminates the aforesaid problems.

### SUMMARY OF THE INVENTION

The present invention has been accomplished under the circumstances in view. It is the main object of the present invention to provide a remote-control door viewer surveillance system, which allows the host of the house to monitor the visitor and to talk to the visitor from a remote place. It is the main object of the present invention to provide a remote-control door viewer surveillance system, which can be directly installed in the door viewer of an existing door.

To achieve these and other objects of the present invention, the remote-control door viewer surveillance system comprises a door viewer, the door viewer comprising a lens holder mounted in a door panel of a house, a lens assembly mounted in the lens holder, and an image sensor holder fastened to the lens holder by a screw joint; an image sensor mounted in the image sensor holder and adapted to pick up image signals through the lens assembly; an image processing circuit electrically connected to the image sensor and adapted to process image signals received from the image sensor into digital image signals; video display means electrically connected to the image processing circuit and adapted to display images of digital image signals outputted by the image processing circuit; a communication module adapted to transmit digital image signals outputted by the image processing circuit to a mobile phone; memory means adapted to store digital image signals outputted by the image processing circuit; and power supply means electrically connected to the image sensor, the image processing circuit, the communication module and the memory means to provide the necessary working voltage. The remote-control door viewer surveillance system further comprises a microphone mounted in the lens holder and adapted to pick up a visitor's voice, a speaker for voice output, a voice amplifier electrically connected in series between the microphone and the speaker and adapted to amplify the voice picked up by the microphone for output through the speaker, and a TCP/IP equipment adapted to transmit the digital image signal outputted by the image processing circuit to a computer at a predetermined IP address for monitoring and storage.

### BRIEF DESCRIPTION OF THE DRAWINGS

FIG. 1 is an exploded view of the present invention.

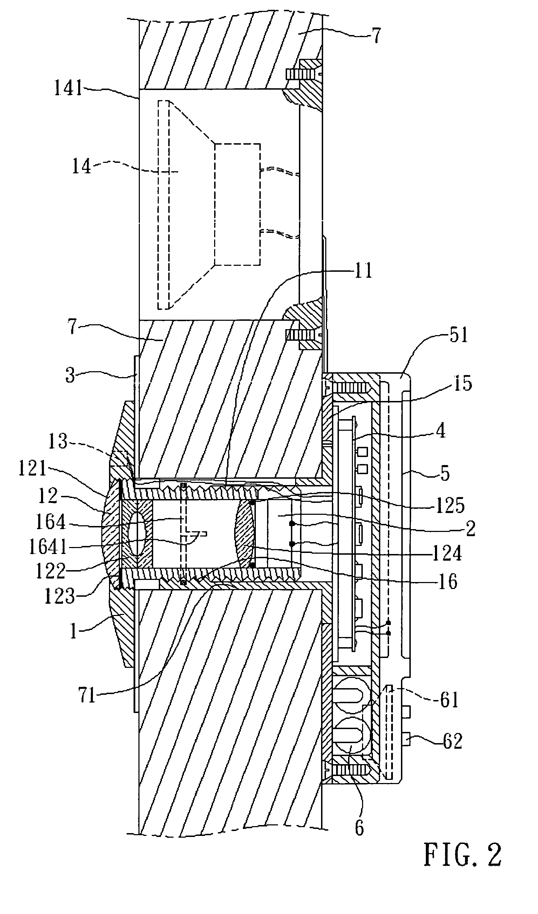

FIG. 2 is a sectional assembly view of the present invention.

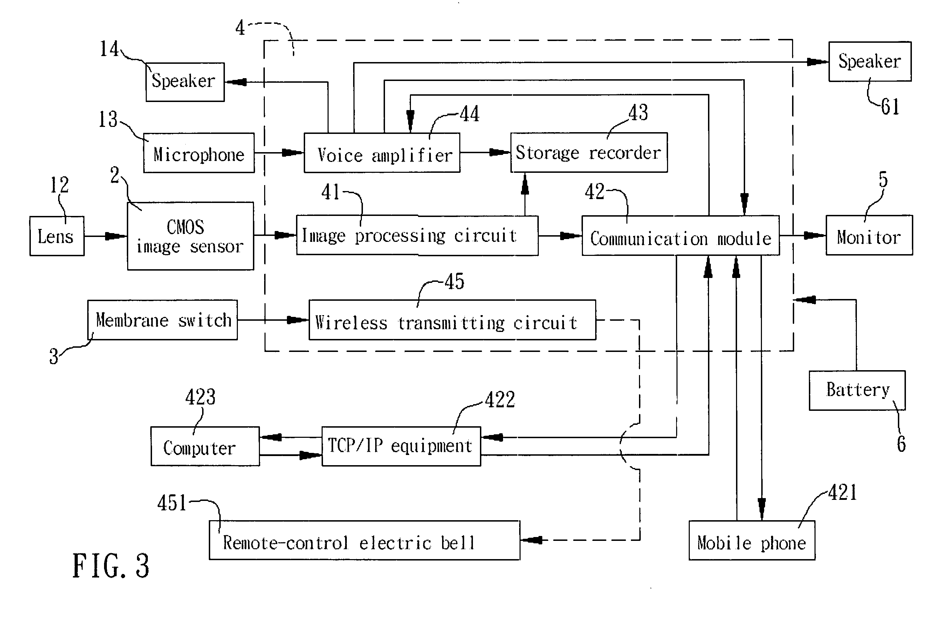

FIG. 3 is a system block diagram of the present invention.
FIG. 4 is a cross sectional view of the present invention, showing the lens holder and the image sensor holder fastened together.
FIG. 5 is a schematic sectional view of the present invention, showing the lens holder and the image sensor holder fastened together.

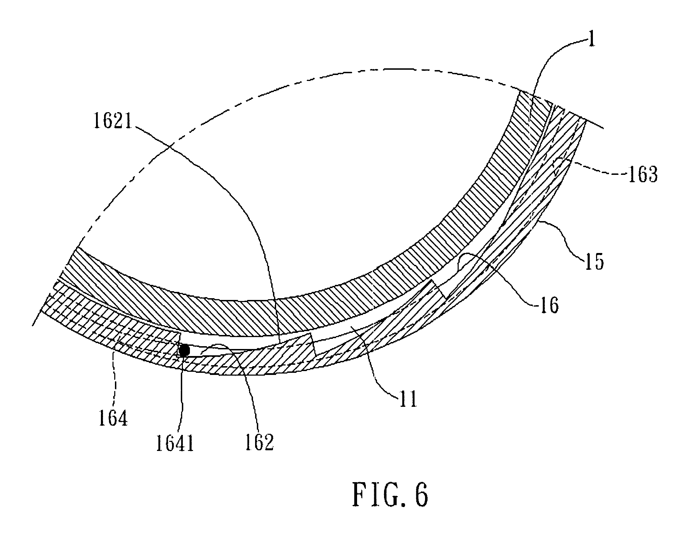

FIG. 6 is an enlarged view of a part of FIG. 4.

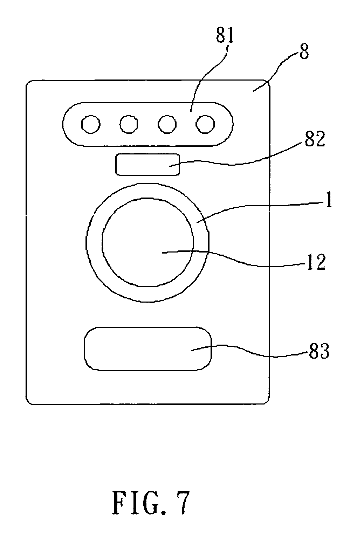

FIG. 7 illustrates the structure of the door viewer face panel according to the present invention.
FIG. 8 is an exploded view of a remote-control door viewer surveillance system in accordance with a second embodiment of the present invention.
FIG. 9 is a sectional view showing the remote-control door viewer surveillance system of the second embodiment of the present invention installed in a door panel.
FIG. 10 is a schematic drawing, showing the structure of a remote-control door viewer surveillance system in accordance with a third embodiment of the present invention.
FIG. 11 is a side view of FIG. 10.

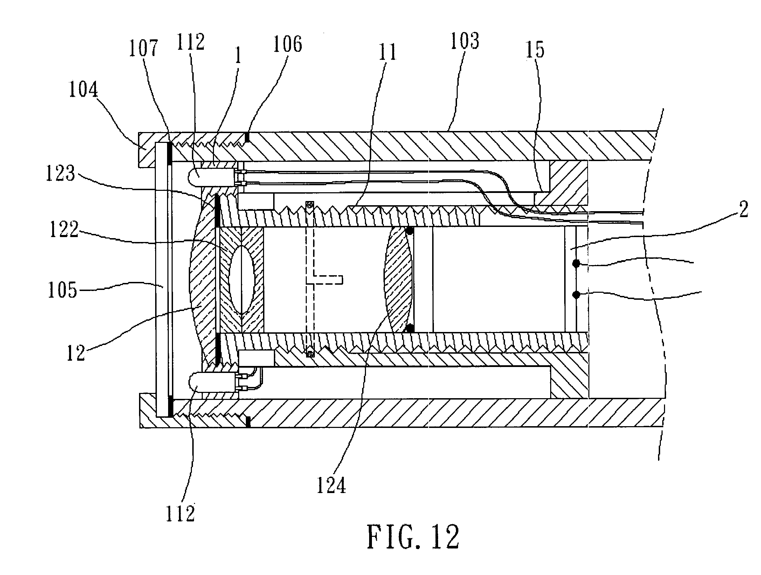

FIG. 12 is a sectional view in an enlarged scale of a part of the remote-control door viewer surveillance system shown in FIG. 10.
FIG. 13 is a perspective view, showing a door viewer used with a camera according to the present invention.
FIG. 14 is a perspective view, showing a door viewer used with a vehicle back guide monitor according to the present invention.

### DETAILED DESCRIPTION OF THE PREFERRED EMBODIMENT

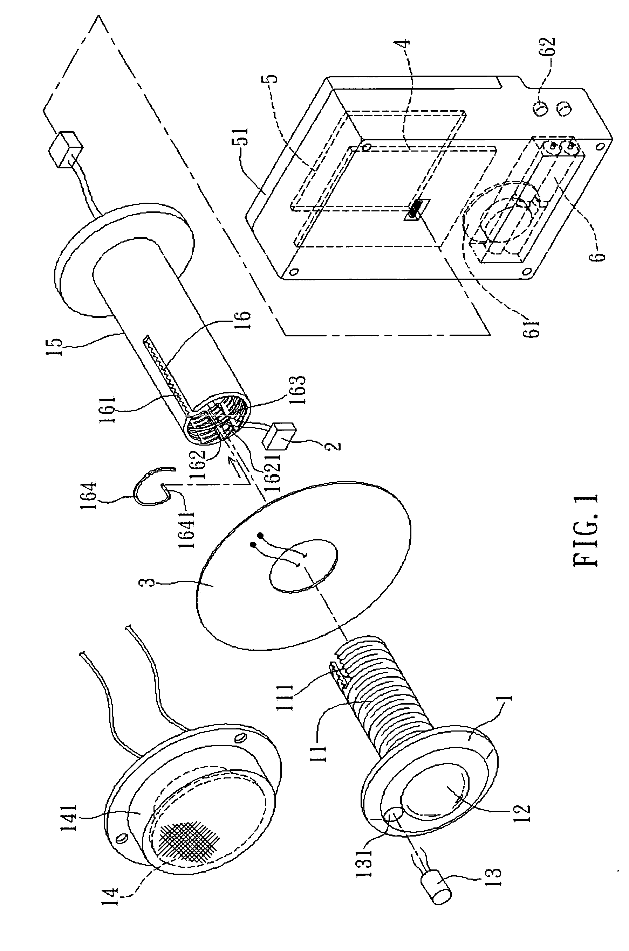

Referring to FIGS. 1∼3, a remote-control door viewer surveillance system is shown comprised of a door viewer, a CMOS image sensor **2,** a control circuit **4,** and a TFT-monitor (or LCD-monitor) **5**. The control circuit **4** comprises an image processing circuit **41,** a communication module **42,** a wireless transmitting circuit **45,** a voice amplifier **44,** and storage recorder **43**. The CMOS image sensor **2** is installed in the door viewer behind a lens assembly **12** to transmit image signal picked up through the lens assembly **12** to the image processing circuit **41,** which processes the image signal into a digital image signal that is further displayed on the TFT-monitor (or LCD-monitor) **5** and stored in the storage recorder **43**. By means of a predetermined setting, the digital image signal can be transmitted by the communication module (GPRS or CDMA communication module) **42** to an assigned mobile phone, for example, the user's mobile phone **421**. Through the mobile phone **421**, the user can monitor the visitor from a remote place, and can immediately take the necessary step, for example, call the police station in case of an intruding event. The digital image signal can also be transmitted by the communication module **42** through a TCP/IP equipment **422** to a computer **423** at an assigned IP address for monitoring and storage. After an event, the police can fetch storage data from the storage recorder **43** of the control circuit **4** for reproduction. The police can also obtain the recorded images from the mobile phone **421** or the computer **423**.

The aforesaid door viewer comprises the aforesaid lens assembly **12**, a lens holder **1**, which has an outer thread **11**, and an image sensor holder **15**, which has an inner thread **16** threaded into the outer thread **11** of the lens holder **1**. The lens assembly **12** is mounted in the front side of the lens holder **1**. The lens holder **1** is mounted in a hole **71** on a door panel **7**. The image sensor holder **15** is fastened to the lens holder **1** to hold the CMOS image sensor **2**. A membrane switch **3** is mounted on the lens holder **1** and electrically connected to the wireless transmitting circuit **45** of the control circuit **4**. When pressed the membrane switch **3**, a signal is produced and transmitted by the wireless transmitting circuit **45** to a remote-control electric bell **451**, causing the remote-control electric bell **451** to ring. Further, the lens holder **1** has an accommodation hole **131** in the front side, and a microphone **13** mounted in the accommodation hole **131** to pick up visitor's voice. When the microphone **13** picked up a voice signal, the voice amplifier **44** amplifies the voice signal and sends the amplified voice signal to a speaker **61** for output. The voice signal can also be transmitted through the communication module **42** to the mobile phone **421**, or to the computer **423** via the TCP/IP equipment **422**. Further, the lens holder **1** and the image sensor holder **15** have a respective wire slot **111** or **161** for the passing of electric wires. The user's voice can also be transmitted through the mobile phone **421** or computer **423** to a speaker **14** in a shell **141** at the door panel **7** to communicate with the visitor.

Further, the aforesaid control circuit **4**, TFT-monitor (LCD-monitor) **5**, and speaker **61** are mounted in a box **51** that is fixedly fastened to the door panel **7**. The box **51** also houses control buttons **62** and a battery **6**. The battery **6** provides the remote-control door viewer surveillance system with the necessary working voltage. Further, a power-saving circuit (not shown) may be installed and electrically connected to the battery **6** to control supply of battery power, Due to the effect of the power-saving circuit, the remote-control door viewer surveillance system is normally in the power-saving standby mode. When the image processing circuit **41** receives an image signal from the CMOS image sensor **2**, or the voice amplifier **44** receives a voice from the microphone **13**, or the wireless transmitting circuit **45** receives a signal from the membrane switch **3**, the power-saving circuit automatically drives on power supply, allowing the remote-control door viewer surveillance system to start working.

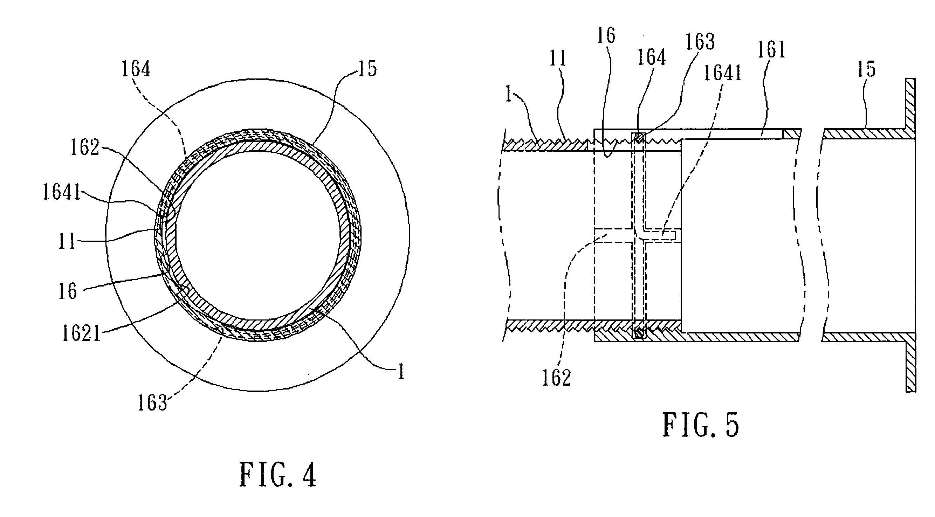

Referring to FIGS. 4∼7 and FIG. 1 again, a sensor **82** is installed in the door viewer face panel **8** and electrically connected to a control circuit **4**. When a visitor or the host is going to enter the house, the sensor **82** detects the presence of the visitor or host to turn on a lighting apparatus **81**, illuminating the surroundings. Further, a touch switch **83** is installed in the door viewer face panel **8** for touching by a visitor to drive an electrical doorbell (not shown). Further, the image sensor holder **15** has an inner thread **16** extending to its one end, an oblique cut groove **162** in the inner thread **16,** and an inside annular groove **163**. A C-shaped retainer **164** is mounted in the inside annular groove **163** inside the image sensor holder **15,** having a stop end portion **1641** disposed in the oblique cut groove **162**. When fastening the lens holder **1** to the image sensor holder **15**, the lens holder **1** is rotated clockwise and fastened up with the image sensor holder **15** and tightly secured with the image sensor holder **15** to the door panel **7**. When an evil person rotates the lens holder **1** is the reversed direction relative to the image sensor holder **15**, the outer thread **11** of the lens holder **1** will rub the stop end portion **1641** of the C-shaped retainer **164** against the bevel edge **1621** of the oblique cut groove **162**, and therefore the stop end portion **1641** of the C-shaped retainer **164** is jammed in the lens holder **1** to stop the lens holder **1** from rotation in the reversed direction relative to the lens holder **1**. Therefore, an evil person cannot detach the lens holder **1** from the image sensor holder **15**. Further, gasket rings **123** and **125** are respectively mounted in between the first lens element **121** and the second lens element **122** and at the outer side of the posterior lens element **124** to seal the lens assembly **12** against outside moisture. Further, the lens assembly **12** is a 180° wide-angle lens assembly.

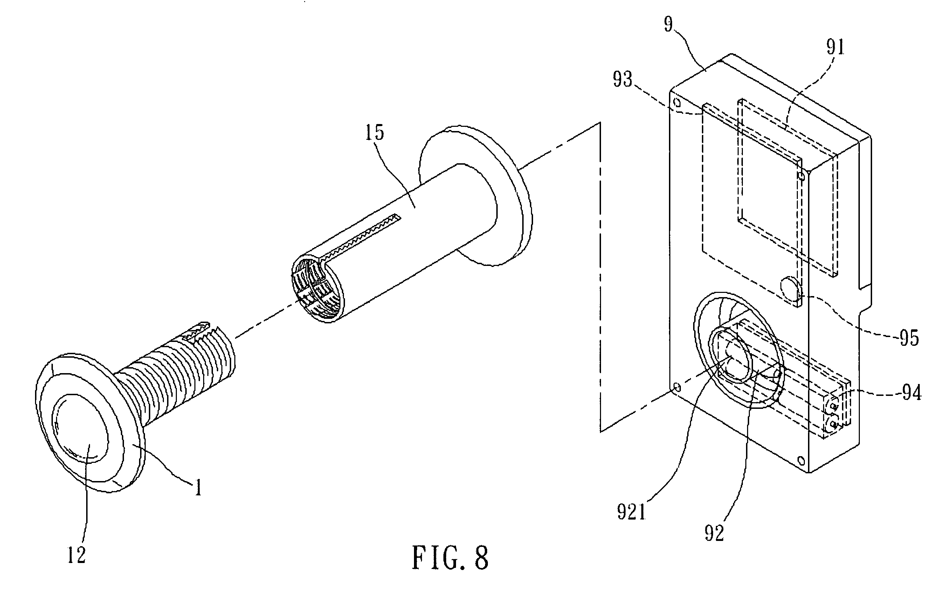

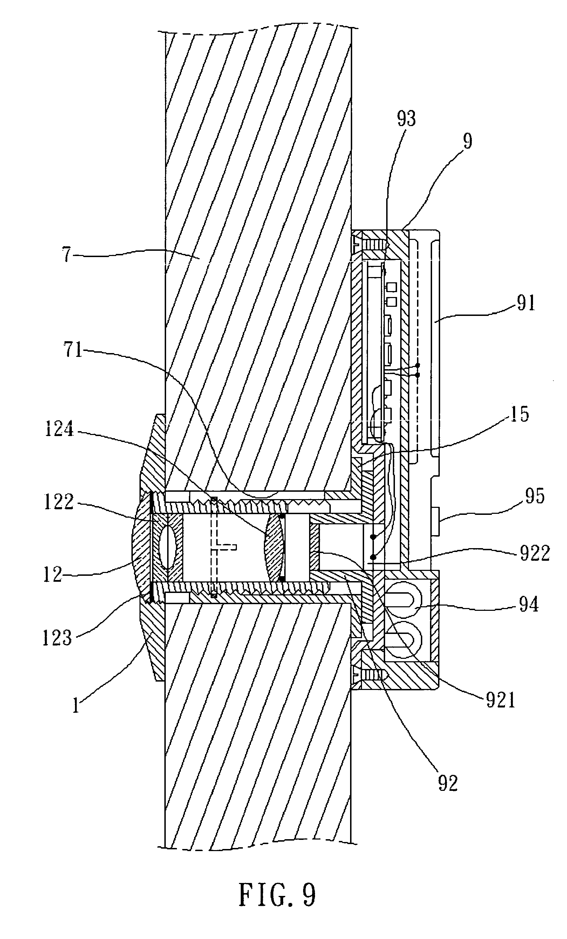

FIGS. 8 and 9 show a remote-control door viewer surveillance system in accordance with a second embodiment of the present invention. According to this embodiment, the door viewer that is comprised of a lens assembly **12**, a lens holder **1** and an image sensor holder **15** is used with a image display unit **9**. The image display unit **9** comprises an image processing circuit **93**, a display screen **91**, an image pickup tube **92**, an image pickup lens **921**, a CMOS image sensor **922**, a DC power supply device (battery pack) **94**, and an on/off control button **95**. The display screen **91** can be a TFT monitor. The door viewer is mounted in a hole **71** on a door panel **7**. The image display unit **9** is fixedly mounted on the inner surface of the door panel **7** to suspend the image pickup tube **92** in the image sensor holder **15**, keeping the image pickup lens **921** and the CMOS image sensor **922** in axial alignment with the lens assembly **12** of the lens holder **1**. Therefore, the CMOS image sensor **922** picks up outside images through the image pickup lens **921** and the lens assembly **12** for processing by the image processing circuit **93**, enabling the processed video signal to be further displayed through the display screen **91**. When a visitor knocked the door, a person inside the house can press on the on/off control button **95** to boost the image display unit **9**, so that the image of the visitor can be seen on the display screen **91**.

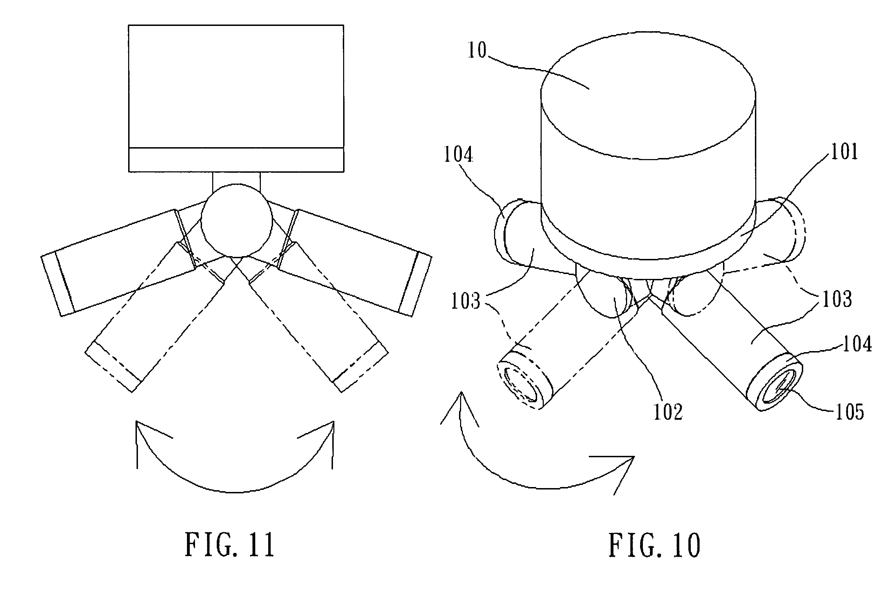

Referring to FIGS. 10∼12, the door viewer constructed according to the embodiment shown in FIG. 1 can be directly sealed in a cylindrical watertight shell **103**. The cylindrical watertight shell **103** has one end, namely, the front end capped with a rotary lens cap **104** that holds a lens **105**. The rear end of the cylindrical watertight shell **103** is connected to a joint **102** at the bottom side of a rotary table **101**. A user can operate the joint **102** to adjust the angle of the cylindrical watertight shell **103** in vertical direction relative to the rotary table **101**. A motor drive **10** is provided for rotating the rotary table **101** horizontally. Further, the door viewer is equipped with a number of infrared lights **112** around the lens assembly **12**. Further, gasket rings **106;107** are mounted in between the cylindrical watertight shell **103** and the rotary lens cap **104** to seal the gap.

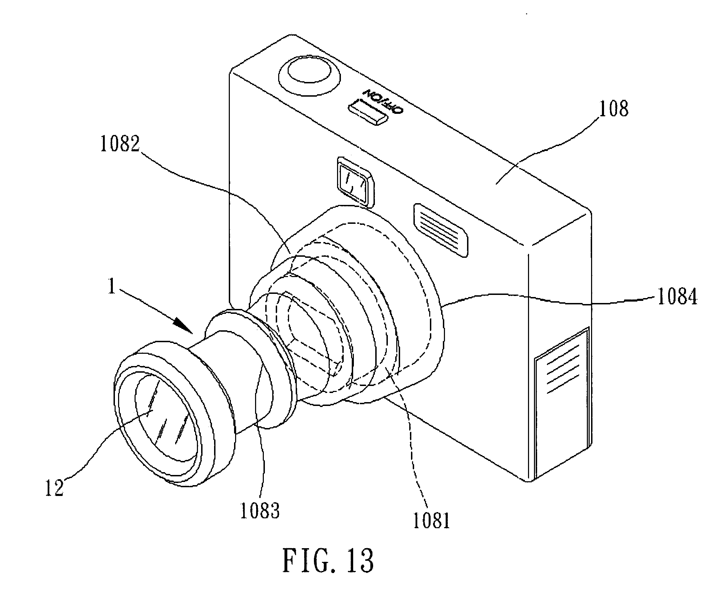

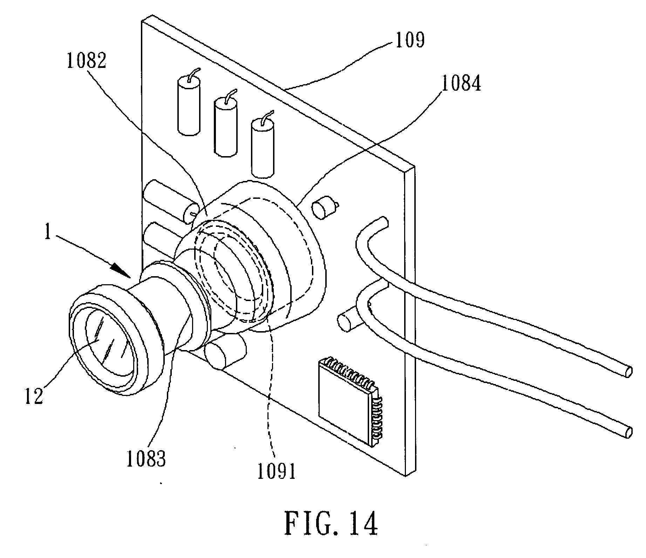

Referring to FIGS. 13 and 14, the door viewer constructed according to the embodiment shown in FIG. 1 can be connected to the lens **1081** or **1091** of a camera **108** or vehicle back guide monitor **109** by an adapter **1082**. The adapter **1082** has a front coupling hole **1083** fastened to the door viewer, and a rear coupling hole **1084** fastened to the lens **1081** or **1091** of the camera **108** or vehicle back guide monitor **109**. Further, the lens assembly **12** of the lens holder **1** of the door viewer uses a wide-angle lens having a wide angle of view.

Although particular embodiments of the invention have been described in detail for purposes of illustration, various modifications and enhancements may be made without departing from the spirit and scope of the invention.

## Claims

1. A remote-control door viewer surveillance system comprising;
a door viewer, said door viewer comprising a lens holder mounted in a door panel of a house, a lens assembly mounted in said lens holder, and an image sensor holder fastened to said lens holder by a screw joint;
an image sensor mounted in said image sensor holder and adapted to pick up image signals through said lens assembly;
an image processing circuit electrically connected to said image sensor and adapted to process image signals received from said image sensor into digital image signals;
video display means electrically connected to said image processing circuit and adapted to display images of digital image signals outputted by said image processing circuit;
a communication module adapted to transmit digital image signals outputted by said image processing circuit to a mobile phone;
memory means adapted to store digital image signals outputted by said image processing circuit; and
power supply means electrically connected to said image sensor, said image processing circuit, said communication module and said memory means to provide the necessary working voltage.

2. The remote-control door viewer surveillance system as claimed in claim 1, further comprising a membrane switch mounted in between a front side of said lens holder and said door panel and adapted to output a signal when pressed by a person, and a wireless transmitting circuit electrically connected to said membrane switch and adapted to transmit the signal produced by said membrane switch to a remote-control electric bell wirelessly to drive said remote-control electric bell to ring.

3. The remote-control door viewer surveillance system as claimed in claim 2, further comprising:
a microphone mounted in said lens holder and adapted to pick up a visitor's voice;
a speaker for voice output; and
a voice amplifier electrically connected in series between said microphone and said speaker and adapted to amplify the voice picked up by said microphone for output through said speaker.

4. The remote-control door viewer surveillance system as claimed in claim 3, further comprising a TCP/IP equipment adapted to transmit the digital image signal outputted by said image processing circuit to a computer at a predetermined IP address for monitoring and storage.

5. The remote-control door viewer surveillance system as claimed in claim 4, further comprising a power-saving circuit electrically connected to said power supply means to control supply of electric power, said power-saving circuit automatically driving on said power supply means to output electricity to said image sensor, said image processing circuit, said communication module and said memory means when said image processing circuit receives an image signal from said image sensor, or when said voice amplifier receives a voice from said microphone, or when said wireless transmitting circuit receives a signal from said membrane switch.

6. The remote-control door viewer surveillance system as claimed in claim 1, further comprising:
a plurality of infrared lights infrared lights mounted in said lens holder around said lens assembly;
a rotary table;
a cylindrical watertight shell, said cylindrical watertight shell having a front end and a rear end;
a rotary lens cap capped on the front end of said cylindrical watertight shell to hold a lens;
a plurality of gasket rings mounted in between said cylindrical watertight shell and said rotary lens cap;
a joint connecting the rear end of said cylindrical watertight shell to a bottom side of said rotary table for allowing adjustment of angle of said cylindrical watertight shell relative to said rotary table in vertical; and
a motor drive adapted for rotating said rotary table.

7. A door viewer for used in a remote-control door viewer surveillance system, comprising:
an image sensor holder installed in a door panel, said image sensor holder comprising an inner thread extending to one end thereof, an oblique cut groove disposed in said inner thread, and an inside annular groove;
a C-shaped retainer mounted in said inside annular groove inside said image sensor holder, said C-shaped retainer having a stop end portion disposed in said oblique cut groove; and
a lens holder holding a lens assembly, said lens assembly comprising a plurality of lens elements, said lens holder comprising an outer thread for threading into said inner thread of said image sensor holder;
wherein when fastening said lens holder to said image sensor holder, said lens holder is rotated clockwise and fastened up with the image sensor holder and tightly secured with said image sensor holder to the door panel; when rotating said lens holder in the reversed direction relative to said image sensor holder after locking of said lens holder with said image sensor holder to said door panel, said outer thread of said lens holder is rubbing said stop end portion of said C-shaped retainer against a bevel edge of said oblique cut groove to have said stop end portion of said C-shaped retainer be jammed in said lens holder, stopping said lens holder from reverse rotation relative to said lens holder.

8. The door viewer as claimed in claim 7, wherein said lens assembly comprises a plurality of gasket rings respectively mounted in between a first lens element and a second lens element thereof and at an outer side of a posterior lens element thereof seal the lens assembly against outside moisture.

9. An auto-illuminating door viewer comprising a lighting apparatus installed in a door viewer face panel thereof, an electrical doorbell, a control circuit for controlling the operation of said lighting apparatus and said doorbell, a sensor installed in said door viewer face panel and electrically connected to said lighting apparatus and adapted to detect the presence of a person and to drive said control circuit to turn on said lighting apparatus upon detection of the presence of a person, and a touch switch for touching by a person to drive said control circuit to turn on said electrical doorbell.

10. A remote-control door viewer surveillance system comprising;
a door viewer, said door viewer comprising a lens holder mounted in a door panel of a house, a lens assembly mounted in said lens holder, and an image sensor holder fastened to said lens holder by a screw joint;
a image display unit, said image display unit comprising an image processing circuit, a display screen, an image pickup tube inserted into said image sensor holder, an image pickup lens mounted in a front end of said image pickup tube, a CMOS image sensor mounted in said image pickup tube, a DC power supply device electrically connected to said image processing circuit and said display screen and said CMOS image sensor to provide the necessary DC working voltage, and an on/off control button for controlling on/off status of said DC power supply device.

11. The remote-control door viewer surveillance system as claimed in claim 10, wherein said DC power supply device is a battery pack.

12. The remote-control door viewer surveillance system as claimed in claim 10, further comprising an adapter adapted for securing said door viewer to the lens of a camera or the lens of a vehicle back guide monitor.
